Europäisches Patentamt

European Patent Office

Office européen des brevets

(19)

(11) Publication number: **0 103 892 B1**

## (12) EUROPEAN PATENT SPECIFICATION

(45) Date of publication of patent specification: **04.09.91**  (51) Int. Cl.⁵: **G11B 7/24, G11B 7/26**

(21) Application number: **83109365.3**

(22) Date of filing: **20.09.83**

(54) Optical recording medium and method of making same.

(30) Priority: **20.09.82 US 419871**

(43) Date of publication of application:
**28.03.84 Bulletin 84/13**

(45) Publication of the grant of the patent:
**04.09.91 Bulletin 91/36**

(84) Designated Contracting States:
**AT BE CH DE FR GB IT LI LU NL SE**

(56) References cited:
**EP-A- 0 022 313      EP-A- 0 051 283
EP-A- 0 072 378      DE-A- 3 203 599
FR-A- 2 368 779      GB-A- 2 005 457**

**PATENTS ABSTRACTS OF JAPAN, vol. 2, no.
154, 25 December 1978; & JP - A - 53 124 404
(TOKYO SHIBAURA DENKI K.K.) 30-10-1978**

(73) Proprietor: **DISCOVISION ASSOCIATES
3300 Hyland Avenue
Costa Mesa California 92626(US)**

(72) Inventor: **Wilkinson, Richard L.
21341 Avenida Manantial
El Toro California 92630(US)**
Inventor: **Slaten, Gary G.
11761 Speedway
Tucson Arizona 85710(US)**

(74) Representative: **Patentanwälte Grünecker,
Kinkeldey, Stockmair & Partner et al
Maximilianstrasse 58
W-8000 München 22(DE)**

## Description

The invention relates to an information storage medium in accordance with the generic clause of claim 1 and to a method of recording a data signal on a moving recording medium in accordance with the generic clause of claim 6

Recording media of this particular type have been especially adapted for use both as master discs for subsequent use in the production of replica discs, and for single recording discs that can be readily produced and played back without the stringent controls imposed in connection with the mass produced variety. In both cases, mastering machines can be designed in order that such discs can be directly read while writing so that proper recording can be instantly verified. Further, in both cases, an information signal is typically recorded in such a disc by a light-radiation absorption process in which an intensity-modulated write beam of light is focused onto the disc as the disc is rotated in a prescribed fashion, thereby changing some characteristic of the disc, such as its reflectivity, in accordance with the information signal.

Recording media that can be used as master discs have typically included a glass substrate having a polished upper surface, with a thin coating of either a photoresist material or a metallic material deposited thereon. In the photoresist embodiment, the intensity-modulated writing beam of light functions to expose a sequence of spaced, microscopic areas on the coating, indicative of the information signal being recorded, and a subsequent development of the photoresist material yields a master disc having a sequence of spaced, microscopic pits formed therein. This master disc can then be suitably coated with a thin layer of a metallic material, such as nickel, using an initial step of vacuum deposition by thermal evaporation, followed by a step of electroplating. The metallic layer can then be removed from the master disc to serve as a stamper, with the recorded information signal carried on its underside, for use in a suitable molding apparatus to produce disc replicas.

Although generally satisfactory in yielding master discs that can be used in the production of disc replicas, such photoresist recording media have not proven entirely satisfactory for a number of reasons. One reason for this dissatisfaction arises from an inability to read the recorded disc prior to the development step. This precludes a continuous adjustment of the recording apparatus, to optimize various recording parameters such as beam intensity and focus, as the disc is being recorded. Another drawback arises from a difficulty in producing pits in the medium having a diameter of less than about .5 microns, and from the fact that the pits in the disc can sometimes have edges that are ragged and grainy, yielding stampers that can damage the replica discs. Still another drawback arises from the need for an additional step of developing the photoresist material.

In the master disc embodiment that includes a thin metallic film, the intensity-modulated write beam of light functions to melt a sequence of spaced holes in the film, indicative of the information signal. Although a signal recorded on such a master disc can be read immediately after being recorded, the relatively high thermal conductivity of the metallic film results in the formation of information-bearing holes in the film that are larger even than those formed in the master discs having photoresist coatings. This limits the recording density that can be achieved. Additionally, a metallic residue is generally formed around each hole, thereby limiting the signal-to-noise ratio that can be achieved during playback of the resultant replica discs.

Recording media that can be used as single recording discs in direct-read-after-write recording apparatus have typically included thin metallic films overlaying plastic substrates or, alternatively, thin layers of highly light-absorptive dielectric materials overlaying substrates having a highly-reflective upper surface. Such discs normally further include a member spaced above the coated substrate to protect the coating from dust and abrasion. In direct-read-after-write recording discs having metallic films, the intensity-modulated beam of light functions to melt a sequence of spaced holes in the film, representative of the information being recorded. However, such metallic film recording discs are subject to the same drawbacks mentioned above, regarding metallic film master recording discs, and thus have not proven entirely successful. Specifically, this includes a limiting recording density and a limited signal-to-noise ratio.

In a typical direct-read-after-write recording disc having a dielectric coating, on the other hand, a sequence of spaced-microscopic pits is formed in the dielectric coating by evaporation or ablating of the coating. Although the pits can be made somewhat smaller in this medium than in the aforementioned metallic film medium, thereby permitting higher recording densities to be realized, the ablating process nevertheless produces a residue of material surrounding each pit that can adversely affect the signal-to-noise ratio that can be achieved during playback.

An improvement over ordinary dielectric layers subject to the ablative effects of a writing beam is found in EP-A-22313. In this reference a coating of explosive material is substituted for the dielectric layer. When subjected to the heating action of the modulated write beam, the coating is selectively energized by the beam to induce spaced explosions therein, whereby corresponding irregularities, representative of the data signal to be recorded, are formed in the outer surface of the coating.

In order to improve the heating efficiency and produce greater resolution in the explosive coating, a dye is added to the coating (e.g. nitrocellulose) prior to coating the substrate of the recording medium. As a result, the finished product is a recording medium comprising a clear plastic substrate and a pitted dyed information coating. Whether dyed or not, the recorded coating presents an information carrying surface such that the reader device of a player must be designed to distinguish a pit area from a non-pit area. Wilkinson proposes the deposition of an intermediate planar mirror-like metal layer on the substrate to improve the signal-to-noise ratio of the read signal. Again here, however, the reflection characteristics of the record medium demand a compatible, non-standard, reader. Since mass produced laser videodiscs present a highly reflective metalized information-containing surface to a player read head, unfortunately the same player is incapable of reading a Wilkinson-type disc without undesirable electro-optical modifications.

Thus, it will be appreciated that there is a need for a recording disc in which even smaller information-bearing surface irregularities can be produced, without the need for a developing step, and without the formation of a residue material or rough edges that can adversely affect the signal-to-noise ratio that can be achieved during playback of such discs. Similarly, it will be appreciated that there is a need for direct-read-after-write recording disc having even smaller and residue-free information-bearing surface irregularities, so that higher recording densities and higher signal-to-noise ratios can be achieved. Finally, in order to make the disc commercially attractive and compatible with players that reproduce mass produced discs, there is a practical need for a disc of the type described above which is additionally able to be played on a standard disc player.

From Japanese publication number 53-1244404 an information storage medium in accordance with the generic clause of claim 1 is known.

In order to meet the above object the information storage medium in accordance with the generic clause of claim 1 is characterized by the features mentioned in the characterizing clause. The inventive method is claimed in claim 6. In accordance with the invention the recording medium comprises a substrate with an effective amount of light absorbing coating overlaying the substrate, such coating including an explosive material wherein as the medium is moved with respect to the intensity-modulated write beam, the coating is selectively heated by the beam to induce spaced explosions therein, whereby corresponding irregularities, representative of the data signal, are formed in the outer surface of the coating. These irregularities are in the form of pits, and, additionally, they can extend either completely through the coating, or alternatively, only to a prescribed depth therein. A light-reflective layer is deposited over the coating containing the surface irregularities resulting in a recording medium that is compatible with players which are designed to play mass produced records.

More particularly, recording media in accordance with the present invention are adapted for use as a single unique, one-of-a-kind recording disc and/or as direct-read-after-write recording discs. In either case, the recording apparatus with which it is used operates to focus onto the disc, as the disc is rotated at a prescribed angular velocity, an intensity-modulated write beam of light and a substantially constant-intensity read beam of light. The write beam produces surface irregularities in a layer of explosive material on the disc, and the entire surface, including irregularities, is overlayed with a highly reflective material. The read beam is reflected by the reflective-layer on the disc in accordance with the pattern of surface irregularities that is recorded by the write beam.

The special light-absorbing coating overlaying the substrate can advantageously comprise a layer of an explosive material such as nitrocellulose, trinitroaniline, or trinitrotoluene, all of which will automatically chemically react to produce non-condensible gases when selectively heated to a prescribed auto-ingition temperature by the focused write beam. The amount of energy from the intensity-modulated beam that is absorbed by the coating can be controlled such that the selected portions of the coating on which the beam impinges are completely exploded.

Complete explosions result in the formation of pits. For explosive materials that are colorless, it is desirable to add to the material a suitable dye that is absorptive of the write beam and that is color-stable and will remain in solution with the explosive material.

The substrate is preferably a thin plastic disc of glass-like amorphous polymer having a smooth planar upper surface, and the surface irregularities formed in the special explosive coating preferably have a depth of at least about 1,000 Å (10Å = 1nm). The resultant disc contains a succession of pits, representative of the data signal, that are narrower than even the $1/e^2$ diameter of the focused write beam, whereby an improved recording density can be achieved.

In accordance with one aspect of the invention, the coating is deposited on the plastic substrate by initially admixing the explosive material and the selected dye, if required, with a suitable solvent. The resultant liquid solution is then poured on the upper surface of the substrate and the coated substrate is spun at a prescribed angular velocity until the liquid coating has achieved a substantially uniform thickness over the entire surface. Continued spinning at a prescribed angular velocity evaporates the solvent, leaving the special coating at a prescribed thickness. The coating thickness can be controlled by varying the viscosity of the solution and the angular velocity at which the disc is spun.

In accordance with another aspect of the present invention, a thin, metallic layer, preferably aluminum, is vacuum deposited over the recorded special coating. Because the metallic layer is highly (typically 80% or greater) reflective, it facilitates a reading of the recorded data signal by the read beam of light, thereby rendering the disc readable by standard laser disc players.

Direct read-after-write (DRAW) disc recording/reproducing systems of the prior art find utility primarily in applications requiring one-of-a-kind or custom recorded programs. For example, in a business that needs quick access to any one of up to 54,000 pages of data that change over a period of time, only one side of a single disc is needed. In this way, new discs can be prepared at regular intervals to reflect current business data. Furthermore, complete control over access to such business records is realized in that monitoring only single copies of each set of data is necessary, and outdated copies can be easily destroyed. As a result of this special application, i.e. the need of only single copies of information data, DRAW machines were designed with specification restraints such as low cost, ease of mastering, and simplicity of operation. Since vacuum deposition is not an "in-home" or "in-office" procedure, DRAW machines required playback read heads that would play non-standard information surfaces. The present invention, requiring a deposited reflective coating (preferrably metal), can perhaps be best suited for discs produced in a low quantity professional production run where one-of-a-kind or proof copies are needed. Since replication is not required, the expense and delays of disc pressing are eliminated.

DRAW machine improvements such as those taught in the aforementioned Wilkinson patent application result in greater signal-to-noise ratios and greater information packing density, due primarily to the use of an explosive data-containing coating. However, without a reflective layer, the read head must be of non-standard design. Wilkinson also proposes an alternate disc construction which does have a metal layer deposited over the explosive layer. However, such metalized layer is deposited over the explosive layer prior to recording. As a result, the finished product, while a satisfactory improvement over non-metalized discs, may still be wanting of further improvement due to several unavoidable factors. First, because the metal layer is deposited prior to recording, it is necessary to only "partially" explode the selected parts of the special coating. This "partial" exploding causes the special coating to swell and not completely ablate, requiring tight tolerances in the control of the write beam intensity so as to cause at least some explosion but not complete explosion. Moreover, such "partial" explosion produces rather rounded bumps as opposed to the well defined sharp-edged pits when complete explosion occurs. Finally, since the metallic layer expands with the expanding explosive layer, the degree of reflectivity at each bump site is altered, most likely in a degrading manner, due to the localized spreading of the metal layer over the expanded area of the bump.

The aforementioned factors associated with the Wilkinson disc are avoided in the present application by depositing an aluminized reflective layer over the already recorded explosive layer. In this manner, in a process involving complete explosion, well defined pits produce well defined reflective pits (or bumps when viewed through the substrate) when metalized. Similarly, in a "partial" explosive process, the metalized bumps are without any reflectivity alteration because the bumps are formed before the metal layer is applied.

For discs having a single recording surface, a plastic protective layer is ordinarily deposited over the reflective layer to protect the reflective layer against dust and abrasion. The intensity-modulated write beam of light can be directed at the reflective layer either from above, through the protective layer, or from below, through the substrate, the latter being the read mode compatible with standard players. For discs having two recording surfaces, two separate plastic substrates, with metallized and protected special coatings deposited thereon, are bonded together with the protective layer in confronting relationship. In this embodiment, the data signal is read by directing the read beam at the metallized special coating through the appropriate substrate.

Other aspects and advantages of the present invention will become apparent from the following description taken in conjunction with the accompanying drawings, which disclose, by way of example, the principles of the invention.

BRIEF DESCRIPTION OF THE DRAWINGS

FIGURE 1 is an enlarged cross-sectional view (not to scale) of a recording disc of the present invention, showing an information-bearing pit formed in a special explosive coating;

FIGURE 2 is a completed recording disc of FIGURE 1 inclusive of light-reflective and protective layers;
FIGURE 3 shows a two-sided disc comprising bonded disc halves of the type shown in FIGURE 2;
FIGURE 4 shows a recording disc similar to that of FIGURE 2 with the pit of a shallower depth.

## DETAILED DESCRIPTION OF THE PREFERRED EMBODIMENTS

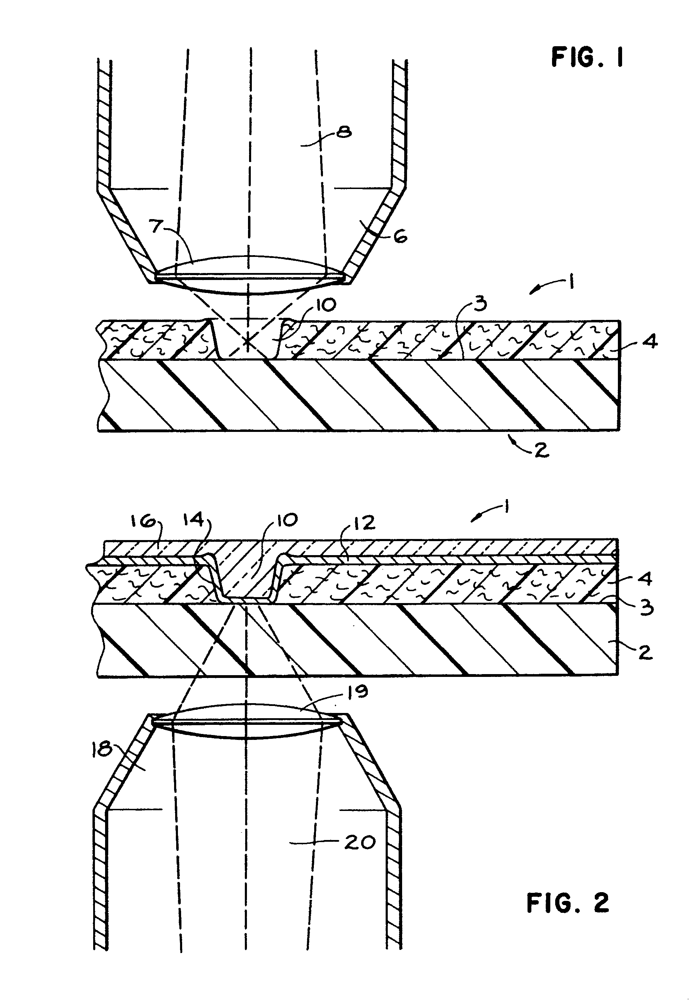

Referring now to the drawings, and particularly to FIGURE 1, there is shown an objective lens 6 of a disc recording apparatus (not shown) for recording a data signal, such as a frequency-modulated video signal or digital signal, on a rotatable recording disc 1. The recording apparatus operates to direct a write beam of light 8 onto the disc 1, as the disc is rotated at a prescribed angular velocity, the beam being modulated in intensity according to a data signal to be recorded. This forms a succession of microscopic information-bearing pits 10, arranged in a plurality of substantially circular recording tracks in a spiral or concentric circle pattern on the disc.

The recording apparatus, in a DRAW machine, further operates to focus onto the disc a read beam of light (not shown) emanating from objective lens 7 in housing 6, having a constant intensity, substantially less than the peak intensity of the write beam 8, to scan the successive pits 10 immediately after they are formed by the write beam. This permits a continuous control of both the power level and focus of the write beam, so that the signal can be recorded properly over the entire disc.

FIGURE 2 is a simplified cross-sectional view of a recording disc 1 that can be used with a standard laser playback apparatus. The disc includes a plastic substrate 2 having a smooth planar surface 3 on its upper side, with a thin layer of special light-absorbing coating 4 deposited thereon. The write beam of light 8 is transmitted through a medium of air adjacent the disc and focused to a diffraction-limited spot on the outer surface of the special coating.

In accordance with the invention, the special coating 4 is composed of a suitable red transmitting, blue absorbing dye in an ablative binder (cellulose nitrate) to define an explosive material which is highly absorptive of the intensity-modulated blue argon ion writing beam of light 8, whereby as the disc 1 is rotated with respect to the beam, the special coating is selectively energized (heated) by the beam to induce spaced explosions therein, forming corresponding irregularities in the form of microscopic pits 10 representative of the data signal. The spaced pits 10 are substantially free of any residue material and are free of sharp corners and roughened sidewalls, whereby the signal-to-noise ratio of the data signals recovered from such discs is of unusually high value. Additionally, the cross-sectional size of the pits can be made small relative to the diffraction-limited spot of the focused write beam, thereby further increasing the density of the data signals that can be recovered from the disc.

The explosive material included in the special light-absorbing coating 4 is a substance that will explode or undergo a rapid chemical reaction to produce gases whenever heated to its auto-ignition temperature. The coating preferably has a relatively low thermal conductivity, so that only the portions of the coating on which the intensity-modulated write beam 8 actually impinges are heated to the critical temperature. Moreover, it is important that the gaseous products of the rapid chemical reaction not condense back onto the coating or onto portions of the recording apparatus after they have cooled. Suitable explosive materials are nitrocellulose, trinitroaniline, and trinitrotolene.

The transparent plastic substrate 2 may be of polymethylmethacrylate, transparent amorphous nylon sold under the trademark TROGAMID, or glycholcarbonate DPG CR-39 monomer casting resin.

In the preferred embodiment of the invention, the write beam 8 is produced by a conventional argon ion laser, which produces a beam having components at approximately 457, 488, and 514 nanometers, and the optics of the writer are optimized for one of the three wavelengths. Accordingly, to be heated by the intensity-modulated write beam, the coating 39 must be absorptive of these wavelengths. Neither nitrocellulose nor trinitrotoluene in inherently highly absorptive of these wavelengths, so whenever these explosive materials are utilized, the coating further includes a suitable orange or red colored dye that is highly absorptive of the wavelengths. The dye must be color-stable and must be readily soluble with the explosive material used. The preferred dye is sold by American Color & Chemical Co. under the trademark AMPLAS ORANGE CR, but other suitable dyes include another dye sold by American Color & Chemical Co., this one under the mark ANAPLAST-SCARLET MM, and also 1-phenyl-azo-2-napthol and azobenzene-4-azo-2-napthol, sold by DuPont under the marks OIL ORANGE and OIL RED, respectively.

The special explosive coating 4 is deposited on the upper surface of the substrate 2 using a special process in which the explosive material and the dye, if required, are initially admixed with a suitable solvent. In the preferred process, ten parts (by weight) of nitrocellulose, three parts of AMPLAS ORANCE CR dye, and about 300-400 parts of the solvent cellosolve acetate, are combined to yield a solution having a viscosity of about 3-5 centipoise. Other suitable solvents for the explosive material and dye mixture include butyl acetate and amyl acetate.

The liquid solution is then poured on the upper surface of the substrate 2, and the coated substrate 2 is then spun at an angular velocity of about 1000 rpm until the solution has achieved a uniform thickness over the entire surface. Continued spinning at about 1000 rpm for about 20-30 seconds evaporates the cellosolve acetate completely, leaving the special coating 4 in the form of a solid solution bonded to the upper surface of the substrate.

The thickness of the coating 4 can be controlled by varying the viscosity of the solution and/or the spin speed. A final thickness of about 1300-1400 Å is preferred, because the pits 10 that are thereafter formed in the coating will have a corresponding depth, thereby enhancing the readability of the disc. More specifically, 1300-1400 Å has been found optimum for best performance of a disc playback apparatus employing a conventional helium-neon laser having a wavelength of 6328 Å.

It has been found that for a coating 4 having this prescribed thickness and having the prescribed relative proportions of nitrocellulose and the specified dye, microscopic pits having a width of about .3 microns are formed by a write beam 8 that is focused to a $1/e^2$ diameter of about .5 microns and that has a peak power of about 20 milliwatts for 50 nanoseconds. It is believed that since the write beam 8 impinges on a selected location on the disc 1 for a time period of less that about 100 nanoseconds, and since the coating 4 has a relatively low thermal conductivity, the spaced explosions are confined to the portions of the coating that are actually illuminated by the beam. It will be appreciated that for coatings that are proportionately more (or less) absorptive of the write beam, the intensity of the beam must be correspondingly lower (or higher) to achieve the same results.

After the pattern of microscopic pits 10, representative of the data signal, has been formed in the disc 1, a metallic overlayer 12 is suitably deposited onto the recorded coating 4. The metallic overlayer 12 provides a highly light-reflective character to the formed pits in the coating 4 so as to improve the quality of the retrieved data by a read beam 20 which can be directed to impinge the metallic layer 12 from above or from below the disc.

One suitable technique for depositing the metallic overlayer includes an initial step of vacuum depositing by thermal evaporation a 200 Å layer of aluminum directly onto the upper surface of the information-bearing coating 4. The recorded data signal is readable on the underside of the disc in the form of bumps or on the upperside of the disc in the form of pits, which correspond to the pits 10 of the disc shown in FIGURE 1, and which will likewise be free of sharp corners and grainy sidewalls and are only approximately .3 microns in width.

A protective layer 16 of plastic material, such as that sold under the trademark Neocryl A601 can be deposited overlaying the light-reflective layer 12 to protect layer 12 against dust and abrasion which could result in subsequent handling of a freshly recorded disc. Moveover, such a protective layer is vital when bonding two disc halves together to form a double-sided disc. The protective layer 16 may be any suitable plastic-like coating that is inert relative to the type of bonding adhesive used and to the type of metal (preferably aluminum) used to form the light-reflective layer 12.

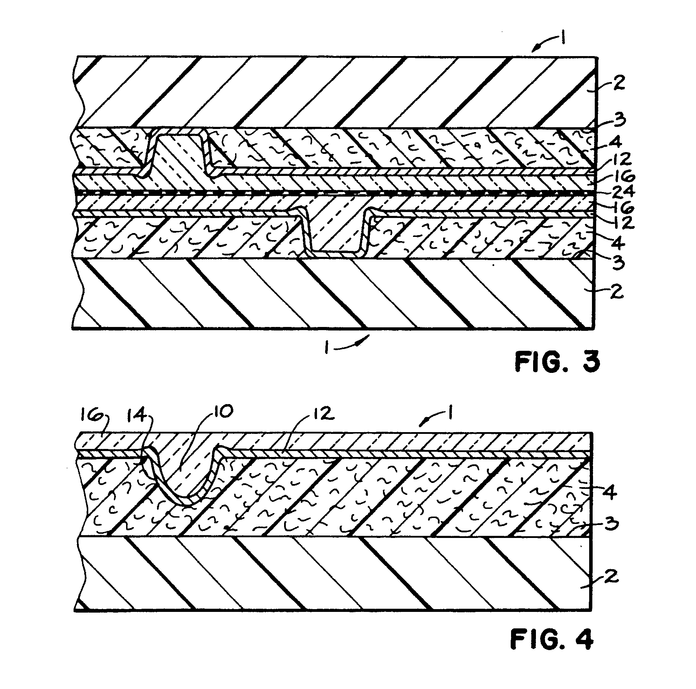

FIGURE 3 depicts another embodiment of a disc in accordance with the present invention, wherein the disc includes two information-bearing surfaces. The disc includes two plastic substrates 2 with a special light-absorbing coating 4 deposited on each substrate. A light-reflective layer 12 is deposited over each recorded explosive layer 4, and each light-reflective layer 12 is covered with a layer 16 of protective plastic. A bonding adhesive 24, such as that sold under the trademark Pliobond, is shown joining the two disc halves.

In yet another embodiment of a recording disc in accordance with the present invention, and having reference to FIGURE 4, the explosive coating 4 is substantially thicker than those shown in the embodiments shown in FIGURES 1-3, preferably having a thickness greater than about one micron, and the surface irregularities are in the form of pits that extend only partially into the top surface of the coating 4. The intensity-modulated write beam 8 is focused onto the top surface of the coating from above the disc. Because the depth of focus of the beam is limited to about .2 microns, however, the focused beam begins to diverge a short distance beneath the surface. As a result, the intensity of the beam is sufficiently high to heat the explosive material to its auto-ignition temperature only within about .4 to .6 microns of the upper surface.

The read beam of light 20 emerging from objective lens 19 in housing 18 has a constant intensity that is insufficient to heat the explosive coating to its auto-ignition temperature, primarily due to the low absorption characteristics of layer 4 at the read beam wavelength, so it does not produce any irregularities in the outer surface of the coating 4. Thus, in the disc of FIGURE 2, when the read beam impinges on portions of the disc 1 not occupied by a pit, it is transmitted through the coating 4 and reflected by the underlying metallic reflective layer 12 back to the objective lens 19. When it is focused on a pit 10, on the other hand, it is reflected by the metallic layer 12, but due to the small size of the pits relative to the wavelength of the read beam, it is diffracted or scattered by the pit and only a small proportion of it is collected by the objective lens. This is especially the case when a lens with a relatively low numerical aperture is utilized. Thus, the reflected beam collected by the objective lens is modulated in intensity by the recorded pattern of pits.

Appropriate electro-optical arrangements for recording and playing back data signals can be found in any of a variety of prior art documents, such as the aforementioned Wilkinson application and U.S. Patent No. 4,225,873 to John S. Winslow.

The explosive layer 4 may, if desirable, have a thickness of about 10,000 Å, so that effects the solvent might have on the underlying plastic substrate will have less effect on the upper portion of the coating, where information-bearing irregularities are to be formed. Alternatively, there is advantage in ablating pits in a substantial ablative layer, e.g. when flat pit bottoms are undesirable.

From the foregoing description, it should be apparent that the present invention provides an improved information recording medium for use in both one-of-a-kind recording apparatus and direct-read-after-write recording apparatus, wherein the completed product includes a light-reflective metalized layer, deposited after recording, overlaying a special coating in which very small surface irregularities in the form of optically readable pits has been formed. The special coating includes an explosive material and the surface pits can be formed therein without the formation of any substantial residue material or any rough edges that could adversely affect the playing characteristics of the disc. As a result, data signals can be recorded in the medium with a very high signal-to-noise ratio, and the disc can be played back on a standard laser reading videodisc player.

## Claims

1. An information storage medium bearing directly-recorded information, said medium comprising a substrate (2) having a major surface (3); an information carrying light absorbing layer (4) on said major surface, having pits in its outwardly facing surface representative of said recorded information; a light reflective layer (12) on said major surface, and a transparent protective layer (16) on the outwardly facing surface of said light reflective layer (12) **characterized by** said light absorbing layer including an explosive material and being uniformly thin, so that the light reflective layer (12) conforms to the outwardly facing surface including said pits, the outwardly facing surface of the light reflective layer thereby having pits matching those of said light absorbing layer.

2. The information storage medium of claim 1, wherein said pits extend to the major surface of said substrate (2).

3. The information storage medium of claim 1, wherein said substrate (2) is transparent.

4. A recording medium of claim 3, wherein said substrate (2) is formed of polymethylmethacrylate in the shape of a disc.

5. A recording medium as defined in claim 3, including: a second transparent disc-shaped substrate (2) corresponding to said first substrate; a second light-absorbing layer (4) on said second substrate, said second light-absorbing layer corresponding to first light-absorbing layer, including an explosive material and having surface discontinuities; a second light-reflective layer (12) in conforming relationship on said second light-absorbing layer corresponding to said first light-reflective layer; a second transparent protective layer (16) of plastic material on said second light-reflective layer; and an adhesive layer bonding said two protective layers together to produce a two-sided record disc, whereby a read beam can be selectively transmitted through either substrate to impinge its light absorbing layer.

6. A method of recording a data signal on a moving recording medium of the type having a substrate and a light-absorbing layer on said substrate, said layer including an explosive material, said method comprising the steps of: moving the recording medium in a prescribed fashion; modulating the intensity of a write beam of light in accordance with the data signal to be recorded; directing the intensity-modulated write beam of light to impinge the outwardly facing surface of the moving light-absorbing layer, said beam being effective to induce spaced explosions, whereby corresponding surface discontinuities, representative of the data signal, are formed extending from the outwardly facing surface of said light-absorbing layer; forming a uniformly thin layer of light-reflecting material in conforming relationship on the outwardly facing surface of said light-absorbing layer, including said discontinuities, said layer of light-reflecting material thereby having surface discontinuities matching those of said light-absorbing layer; and forming a transparent protective coating on said light-reflecting layer.

7. A method as defined in claim 6, wherein the intensity-modulated write beam of light is sufficient to induce complete explosions in the selected portions of the coating on which the beam impinges, yielding pits in at least the outer surface of the coating, representative of the data signal.

8. A method as defined in claim 6, wherein the intensity of the intensity-modulated write beam of light is sufficient to induce only partial explosions in the selected portions of the coating on which the beam impinges, yielding upraised bumps in the coating, representative of the data signal.

9. A method as defined in claim 6 wherein:
said substrate includes a polymethylmethacrylate material; and
said next to last-mentioned forming step includes the step of vacuum depositing, on the outer surface of the coating containing said surface irregularities, a layer of metallic material.

**Revendications**

1. Un support de stockage d'informations portant des informations enregistrées directement, ledit support comprenant un substrat (2) ayant une surface principale (3) ; une couche absorbante de lumière (4) portant des informations sur ladite surface principale, ayant des creux dans sa surface faisant face à l'extérieur représentatifs des informations enregistrées ; une couche de réflexion de lumière (12) sur ladite surface principale, et une couche de protection transparente (16) sur la surface faisant face à l'extérieur de la couche de réflexion de lumière (12), caractérisé par la couche absorbante de lumière comprenant un matériau explosif et uniformément fine, de sorte que la couche de réflexion de lumière (12) se conforme à la surface faisant face à l'extérieur comprenant lesdits creux, la surface faisant face à l'extérieur de la couche de réflexion de lumière ayant de la sorte des creux s'accordant à ceux de ladite couche absorbante de lumière.

2. Le support de stockage d'informations selon la revendication 1, où les creux précités s'étendent à la surface principale du substrat précité (2).

3. Le support de stockage d'informations selon la revendication 1, où le substrat précité (2) est transparent.

4. Un support d'enregistrement selon la revendication 3, où le substrat précité (2) est formé de polyméthylméthacrylate en forme d'un disque.

5. Un support d'enregistrement défini dans la revendication 3, comprenant :

un second substrat en forme de disque transparent (2) correspondant au premier substrat précité ;

une seconde couche absorbante de lumière (4) sur le second substrat, ladite seconde couche absorbante de lumière correspondant à une première couche absorbante de lumière, comprenant un matériau explosif et ayant des discontinuités de surface ;

une seconde couche de réflexion de lumière (12) en relation de conformité sur la seconde couche absorbante de lumière correspondant à la première couche de réflexion de lumière ; une seconde couche de protection transparente (16) de matière plastique sur la seconde couche de réflexion de lumière ; et une couche adhésive liant les deux couches de protection ensemble pour produire un disque d'enregistrement à deux faces, de sorte qu'un faisceau de lecture puisse être sélectivement transmis à travers l'un ou l'autre des substrats pour frapper sa couche absorbante de lumière.

6. Un procédé d'enregistrement d'un signal de données sur un support d'enregistrement mobile du type ayant un substrat et une couche absorbante de lumière sur ledit substrat, lesdites couches comprenant un matériau explosif, ledit procédé comprenant les étapes de :

déplacer le support d'enregistrement d'une façon prescrite ;

moduler les intensités d'un faisceau d'écriture de lumière selon le signal de données à enregistrer ;

diriger le faisceau de lumière d'écriture modulé en intensité pour frapper la surface faisant face à l'extérieur de la couche absorbante de lumière en déplacement, ledit faisceau étant efficace pour induire des explosions espacées, de la sorte des discontinuités de surface correspondantes, représentatives du signal de données, sont formées s'étendant de la surface faisant face à l'extérieur de ladite couche absorbante de lumière ;

former une couche uniformément fine d'un matériau réfléchissant la lumière en relation de conformité sur la surface faisant face à l'extérieur de la couche absorbante de lumière, comprenant lesdites discontinuités, ladite couche de matériau réfléchissant la lumière ayant ainsi des discontinuités de surface s'accordant à celles de la couche absorbante de lumière ; et

former un revêtement de protection transparent sur la couche de réflexion de lumière.

7. Un procédé tel que défini dans la revendication 6, où le faisceau d'écriture de lumière modulé en l'intensité est suffisant pour induire des explosions complètes dans les portions choisies du revêtement sur lequel le faisceau est incident, produisant des creux dans au moins la surface externe du revêtement représentatifs du signal de données.

8. Un procédé tel que défini dans la revendication 6, où l'intensité du faisceau d'écriture de lumière modulé en intensité est suffisante pour induire seulement des explosions partielles dans des portions choisies du revêtement sur lequel le faisceau est incident, produisant des bosses surélevées dans le revêtement, représentatives du signal de données.

9. Un procédé tel que défini dans la revendication 6, où :

le substrat précité comprend un matériau polyméthylméthacrylate ; et

l'étape précitée suivant l'étape de formation susmentionnée comprend l'étape de dépôt sous vide, sur la surface externe du revêtement contenant lesdites irrégularités de surface, d'une couche d'un matériau métallique.

## Patentansprüche

1. Ein Informationsspeichermedium, das direkt aufgezeichnete Information trägt, wobei das Medium umfaßt: ein Substrat (2), das eine Hauptoberfläche (3) aufweist;

eine informationtragende lichtabsorbierende Schicht (4) auf der Hauptoberfläche, welche in ihrer nach außen weisenden Oberfläche Vertiefungen aufweist, die repräsentativ für die aufgezeichnete Information sind;

eine lichtreflektierende Schicht (12) auf der Hauptoberfläche, und eine transparente Schutzschicht (16) auf der nach außen weisenden Oberfläche der lichtreflektierenden Schicht (12), **dadurch gekennzeichnet,** daß die lichtabsorbierende Schicht ein explosives Material enthält und gleichmäßig dünn ist, so daß die lichtreflektierende Schicht (12) sich der nach außen weisenden Oberfläche, die die Vertiefungen enthält, anpaßt, wobei die nach außen weisende Oberfläche der lichtreflektierenden Schicht dadurch Vertiefungen aufweist, die denen der lichtabsorbierenden Schicht angepaßt sind.

2. Das Informationsspeichermedium nach Anspruch 1, wobei die Vertiefungen sich zur Hauptoberfläche des Substrats (2) erstrecken.

3. Das Informationsspeichermedium nach Anspruch 1, wobei das Substrat (2) transparent ist.

4. Ein Informationsspeichermedium nach Anspruch 3, wobei das Substrat (2) aus Polymethylmetacrylat in der Form einer Scheibe gebildet ist.

5. Ein Aufzeichnungsmedium nach Anspruch 3, das enthält:

ein zweites transparentes scheibenförmiges Substrat (2), das dem ersten Substrat entspricht;

eine zweite lichtabsorbierende Schicht (4) auf dem zweiten Substrat, wobei die zweite lichtabsorbierende Schicht der ersten lichtabsorbierenden Schicht entspricht, ein explosives Material enthält und Oberflächendiskontinuitäten aufweist;

eine zweite lichtreflektierende Schicht (12), die an die zweite lichtabsorbierende Schicht angepaßt ist und der ersten lichtreflektierenden Schicht entspricht;

eine zweite transparente Schutzschicht (16) aus Plastikmaterial auf der zweiten lichtreflektierenden Schicht; und eine adhäsive Schicht, die die zwei Schutzschichten zusammenbindet, um eine zweiseitige Aufzeichnungsplatte zu erzeugen, wodurch ein Lesestrahl selektiv durch das eine oder andere Substrat geschickt werden kann, um auf seine lichstabsorbierende Schicht zu stoßen.

6. Verfahren zur Aufzeichnung eines Datensignals auf einem sich bewegenden Aufzeichnungsmedium von der Art, welche ein Substrat und eine lichtabsorbierende Schicht auf dem Substrat aufweist, wobei die Schicht ein explosives Material enthält und das Verfahren die Schritte umfaßt:

Bewegen des Aufzeichnungsmediums in einer vorgeschriebenen Weise;

Modulieren der Intensität eines Lichtschreibstrahls in Übereinstimmung mit dem aufzuzeichnenden Datensignal;

Ausrichten des intensitätmodulierten Lichtschreibstrahls, um auf die nach außen weisende Oberfläche der sich bewegenden lichtabsorbierenden Schicht zu stoßen, wobei der Strahl in der Lage ist, räumliche begrenzte Explosionen zu induzieren, wodurch entsprechende Oberflächendiskontinuitäten, die repräsentativ für das Datensignal sind, gebildet werden, die sich von der nach außen weisenden Oberfläche der lichtabsorbierenden Schicht aus erstrecken;

Bilden einer gleichmäßig dünnen Schicht aus lichtreflektierendem Material, die an die nach außen weisende Oberfläche der lichtabsorbierenden Schicht, die die Diskontinuitäten enthält, angepaßt ist, wobei die Schicht aus lichtreflektierendem Material dadurch Oberflächendiskontinuitäten aufweist, die denen der lichtabsorbierenden Schicht angepaßt sind; und

Bilden eines transparenten Schutzüberzugs auf der lichtreflektierenden Schicht.

7. Ein Verfahren nach Anspruch 6, wobei der intensitätsmodulierte Lichtschreibstrahl ausreichend ist, komplette Explosionen in ausgewählten Bereichen des Überzugs, auf welchen der Strahl auftrifft, zu erzeugen, wobei sich Vertiefungen in wenigstens der äußeren Oberfläche des überzugs ergeben, die repräsentativ für das Datensignal sind.

8. Ein Verfahren nach Anspruch 6, wobei die Intensität des intensitätsmodulierten Lichtschreibstrahls ausreichend ist, nur partielle Explosionen in ausgewählten Bereichen des überzugs, auf welchen der Strahl auftrifft, zu erzeugen, wobei sich in dem Überzug nach oben gerichtete Beulen ergeben, die repräsentativ für das Datensignal sind.

9. Ein Verfahren nach Anspruch 6, wobei das Substrat ein Polymethylmetacrylatmaterial enthält und der auf den letztgenannten Verfahrensschritt folgende den Verfahrensschritt der Vakuumbeschichtung einer Schicht aus metallischem Material auf der äußeren Oberfläche des Überzugs, der die Oberflächendiskontinuitäten umfaßt, enthält.

FIG. 1

FIG. 2

FIG. 3

FIG. 4